# EUROPEAN PATENT SPECIFICATION

(11) **EP 4 371 449 B1**
(45) Date of publication and mention of the grant of the patent: **30.04.2025**
(21) Application number: 23157068.0
(22) Date of filing: 16.02.2023
(51) Int. Cl.: A47J 37/06

(54) **AIR FRYER FITTED WITH ATMOSPHERE LIGHT ASSEMBLY**
LUFTFRITEUSE MIT ATMOSPHÄRENLICHTANORDNUNG
FRITEUSE À AIR AVEC ENSEMBLE D'ÉCLAIRAGE D'ATMOSPHÈRE

(30) Priority: 21.11.2022 CN 202223093616 U
(43) Date of publication of application: 22.05.2024
(73) Proprietor: Zhejiang Biyi Electric Appliance Co., Ltd., Yuyao, Zhejiang 315400 (CN)
(72) Inventor: Man, Kaimong, Yuyao, 315400 (CN); Wu, Jiangshui, Yuyao, 315400 (CN); Liu, Liqun, Yuyao, 315400 (CN)
(74) Representative: Petraz, Gilberto Luigi

(56) References cited:
- EP-A1- 2 520 201
- EP-A1- 3 912 529
- US-B1- 6 747 250

## Description

### Field of the invention

The present invention relates to the technical field of cooking appliance, in particular to an air fryer fitted with an atmosphere light assembly.

### Background of the invention

With the development of the society and the continuous improvement of the living standard of people, the rhythm of people's life becomes increasingly faster. People also need to maintain a healthy diet in their busy lives. The air fryer is a new household appliance that uses high-speed and high-temperature air circulation technology to fry food. The food made by air fryer may reduce about 80% of the fat compared to traditional frying. Moreover, it is easy to clean the air fryer in daily use, which is both safe and affordable, thus highly preferred by people.

As the functions of the air fryer increase, the associated functional states need to be displayed. Most existing air fryers display on the housing panel presented by text or graphical percentages, which provides poor experience. In addition, it is difficult to attract young people, who are the target market, to purchase the existing air fryers, since on the market they are single in style lacking a sense of superiority and atmosphere experience. US 6 747 250 B1 discloses a countertop oven with a transparent body.

### Summary of invention

In order to overcome the above-mentioned defects of the prior art, the present invention provides an air fryer with an atmosphere light assembly. By providing the atmosphere light assembly, an LED light strip provided on the atmosphere light assembly may change the flashing frequency and color according to different cooking states, which is more intuitive and improves the user's cooking experience.

The technical solution adopted by the present invention to solve the problem is as follows:

An air fryer with an atmosphere light assembly, comprising at least:
an upper housing assembly, wherein the upper housing assembly comprises a ring-shaped upper housing, the upper housing encloses a first chamber, and the upper housing is made of transparent material; and
an atmosphere light assembly, wherein the atmosphere light assembly comprises a ring-shaped lightshade located within the first chamber, an LED light strip wound around a bottom of an outer perimeter of the lightshade, and a circuit board electrically connected to the LED light strip; and a plurality of light guiding columns are provided on an upper ring of an outer side wall of the lightshade.

The present invention provides an air fryer with an atmosphere light assembly. By providing the atmosphere light assembly, an LED light strip provided on the atmosphere light assembly may change the flashing frequency and color according to different cooking states, which is more intuitive and improves the user's cooking experience. Then, by providing a light guiding column on the lightshade, when the light from the LED light strip shines on the lightshade, the light effect may be formed on the lightshade with a sense of beauty, so as to enhance the sense of atmosphere of the air fryer and make it more superior. Finally, the LED light strip may also be used as a night light or supplemental illumination, so as to improve the brightness in other areas of the kitchen and facilitate user's operation.

Further, the upper housing assembly further comprises a ring-shaped connecting housing provided at a bottom of the upper housing, wherein a mounting slot is provided on an internal of the connecting housing, and the LED light strip is mounted in the mounting slot.

Further, the air fryer further comprises a lower housing assembly, wherein the lower housing assembly comprises a lower housing provided at a bottom of the connecting housing and encloses a second chamber, an inner housing provided within the second chamber, and a mounting bracket provided between the first chamber and the second chamber; the mounting bracket and the inner housing enclose a cooking chamber, and a heating assembly is provided at a top of the cooking chamber.

Further, the cooking chamber is provided with a heat insulating plate to separate an upper and a lower part of the cooking chamber into a heat dissipation chamber and a heating chamber; wherein the heating assembly comprises a motor mounted on the mounting bracket, a first air blade sleeved on an output shaft of the motor and located in the heat dissipation chamber, a second air blade mounted on the output shaft of the motor and located in the heating chamber, and a heating pipe mounted on the heat insulating plate and located below the second air blade.

Further, the air fryer further comprises an exhaust base penetrating the upper housing and/or the connecting housing and the lightshade, wherein the exhaust base is connected to the heat dissipation chamber, and an exhaust window connected to an external area is provided on the exhaust base.

Further, the first air blade is a turbine air blade, and the mounting bracket and the heat insulating plate enclose a turbine air duct.

Consequently, compared with the traditional air duct structure, by providing turbine air blades and turbine air ducts, the air guiding efficiency may be higher, the temperature rise of the exterior of the product and the motor may be reduced, and the heat dissipation effect may be improved.

Further, the air fryer further comprises a humidifying assembly, wherein the humidifying assembly comprises a water tank mounted on the upper housing, a nozzle mounted on the mounting bracket and a water pump, the water tank is connected to the water pump through an inlet tube, and the nozzle is connected to the water pump through an outlet tube and is provided in the heating chamber.

Consequently, the water pump may increase the taste and flavor of the food by extracting water or food seasoning dissolved in water from the water tank and sprinkling the water on the food through the nozzle.

Further, the upper housing is provided with a mounting chamber for mounting the water tank, a snapping slot is provided on the mounting chamber, a snapping column that is snap-fitted to the snapping slot is provided at a bottom of the water tank, the water tank is provided with a water outlet hole, a through channel connected to the water outlet hole is provided in the snapping column, a drainage nozzle located at a bottom of the snapping slot and connected to the snapping slot is further provided on the upper housing, and an end of the inlet tube is sleeved on the drainage nozzle.

Further, the air fryer further comprises a guiding assembly provided between the water tank and the mounting chamber, and the guiding assembly comprises a positioning column, a sealing gasket, and an elastic part; wherein:
a snapping ring is provided in the water outlet hole, an upper end of the positioning column passes sequentially through the snapping slot and the snapping ring and is connected to the sealing gasket, a lower end of the positioning column is provided with a restricting step, the elastic part is sleeved on the positioning column, an end of the elastic part is connected to a bottom of the snapping ring, and another end of the elastic part is abutted on the restricting step;
the sealing gasket on the positioning column is able to be driven downward and seals the water outlet hole under an elastic force of the elastic part; and
the snapping slot is also provided with a protruding column, when the snapping column is inserted into the snapping slot, the protruding column abuts the positioning column and drives the positioning column to overcome the elastic force of the elastic part and to move upwards, which consequently drives the sealing gasket to move upwards, so as to open the water outlet hole.

Further, the air fryer further comprises a sealing ring sleeved on an external wall of the snapping column, wherein an external side of the sealing ring abuts against an internal wall of the snapping slot to form a watertight seal, when the snapping column is inserted into the snapping slot.

Further, the air fryer further comprises a fryer, a first opening connected to the heating chamber is provided on a rear side of the inner housing, and the fryer is detachably provided in the heating chamber through the first opening;
wherein the fryer comprises a fryer body and a handle provided on the fryer body, an accommodating chamber for placing food is formed inside the fryer body; a second opening connected to the accommodating chamber is provided on a rear side of the fryer body, a viewing cover is provided at the second opening to seal the second opening, and the viewing cover is made of transparent material.

Further, the air fryer further comprises an oven light provided on the mounting bracket for lighting, the oven light passes through the heat insulating plate and extends into the heating chamber.

Consequently, when the product is in use, the user may observe the cooking state of the food in the fryer in real time through the transparent viewing cover, and may turn over, season or dispense the food according to the state of the food, so as to ensure the quality of cooked food.

In summary, the beneficial effects of an air fryer with an atmosphere light assembly of the present invention are as follows.
(1)The present invention provides an air fryer with an atmosphere light assembly. By providing the atmosphere light assembly, an LED light strip provided on the atmosphere light assembly may change the flashing frequency and color according to different cooking states, which is more intuitive and improves the user's cooking experience. Then, by providing a light guiding column on the lightshade, when the light from the LED light strip shines on the lightshade, the light effect may be formed on the lightshade with a sense of beauty, so as to enhance the sense of atmosphere of the air fryer and make it more superior. Finally, the LED light strip may also be used as a night light or supplemental illumination, so as to improve the brightness in other areas of the kitchen and improve the user experience.
(2) The present invention provides an air fryer with an atmosphere light assembly by providing turbine air blades and turbine air ducts, compared with the traditional air duct structure, the air guiding efficiency may be higher, the temperature rise of the exterior of the product and the motor may be reduced, and the heat dissipation effect may be improved.
(3)The present invention provides an air fryer with an atmosphere light assembly by providing a humidifying assembly, wherein the water pump may increase the taste and flavor of the food by extracting water or food seasoning dissolved in water from the water tank and sprinkling the water on the food through the nozzle.
(4)The present invention provides an air fryer with an atmosphere light assembly, wherein, when the product is in use, the user may observe the cooking state of the food in the fryer in real time through the transparent viewing cover, and may turn over, season or dispense the food according to the state of the food, so as to ensure the quality of cooked food.

### Brief description of the drawings

FIG. 1 is an exploded diagram of the air fryer of the present invention;
FIG. 2 is a structure diagram of the air fryer of the present invention;
FIG. 3 is a structure diagram of another view of the air fryer of the present invention.
FIG. 4 is a structure diagram of FIG. 3 with the top cover hidden.
FIG. 5 is a structure diagram of FIG. 4 with the water tank and circuit board hidden.
FIG. 6 is an exploded diagram of the water tank of the present invention.
FIG. 7 is a structure diagram of the bottom of the water tank of the present invention.
FIG. 8 is a structure diagram of the upper housing of the present invention.
FIG. 9 is a structure diagram of FIG. 5 with the upper housing and power module hidden.
FIG. 10 is a structure diagram of FIG. 9 with the atmosphere light assembly hidden.
FIG. 11 is a structure diagram of FIG. 10 with the heat insulating plate hidden. The meanings of the attached marks are as follows:
   1: upper housing; 101: mounting chamber; 1011: snapping slot; 10111: protruding column; 1012: drainage nozzle; 2: lightshade; 201: light guiding column; 3: LED light strip; 4: circuit board; 5: connecting housing; 501: mounting slot; 6: top cover; 7: exhaust base; 701: exhaust window; 8: water tank; 801: water outlet hole; 8011: snapping ring; 802: snapping column; 9: water pump; 10: nozzle; 11: inlet tube; 12: outlet tube; 13: lower housing; 14: inner housing; 15: mounting bracket; 16: heat insulating plate; 17: motor; 18: first air blade; 19: second air blade; 20: heating pipe; 21: fryer body; 22: handle; 23: viewing cover; 24: glass panel; 25: oven light; 26: wire winding column; 27: power module; 28: sealing gasket; 29: positioning column; 2901: restricting step; 30: elastic part; 31: sealing ring.

### Detailed description of the preferred embodiments

For better understanding and implementation, the technical solutions in the embodiments of the present invention will be clearly and completely described below in conjunction with the attached drawings of the embodiments of the present invention.

In the description of the present invention, it is to be noted that the terms "up", "down", "front", "back", "left", "right", "vertical", "horizontal", "top", "bottom", "inside", "outside" and other orientation or position relationships are based on the orientation or position relationships shown in the attached drawings. It is only intended to facilitate description and simplify operation, but not to indicate or imply that the referred device or element has a particular orientation, or is constructed and operated in a particular orientation. Therefore, they should not be construed as a limitation of the present invention.

Unless otherwise defined, all technical and scientific terms used herein have the same meaning as commonly understood by those skilled in the art of the invention. The terms used herein in the specification of the invention are for the purpose of describing specific embodiments only and are not intended to restrict the invention.

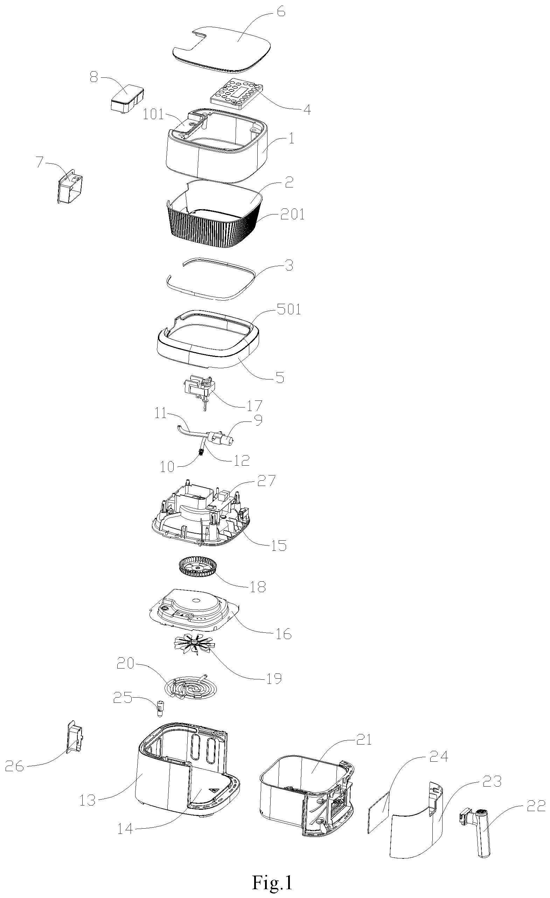

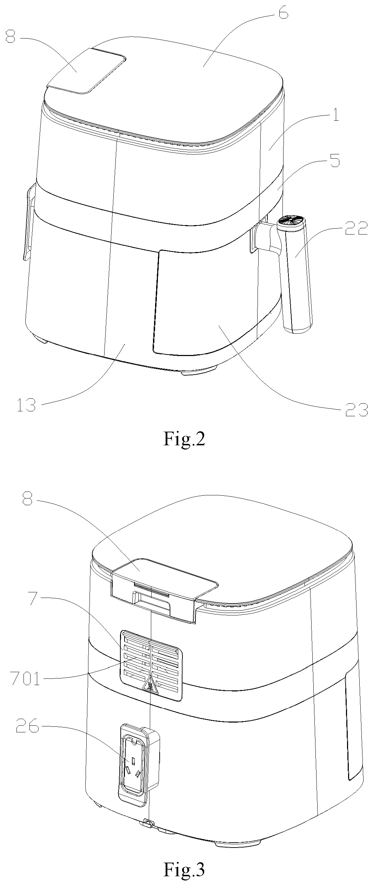

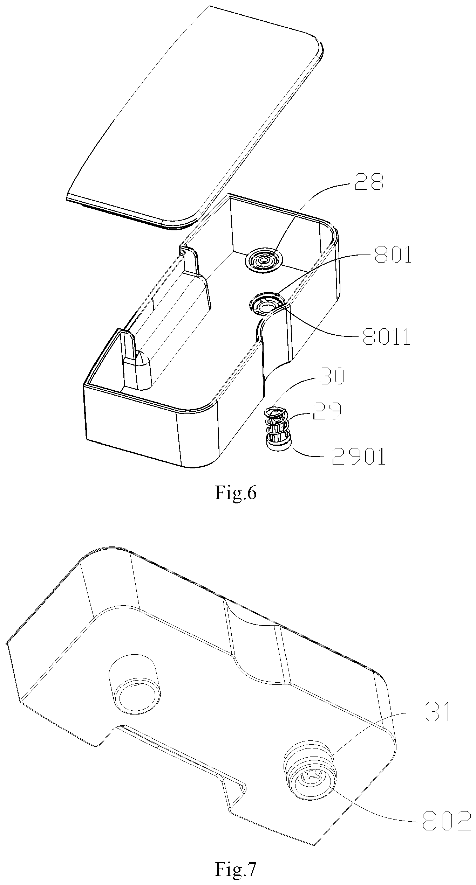

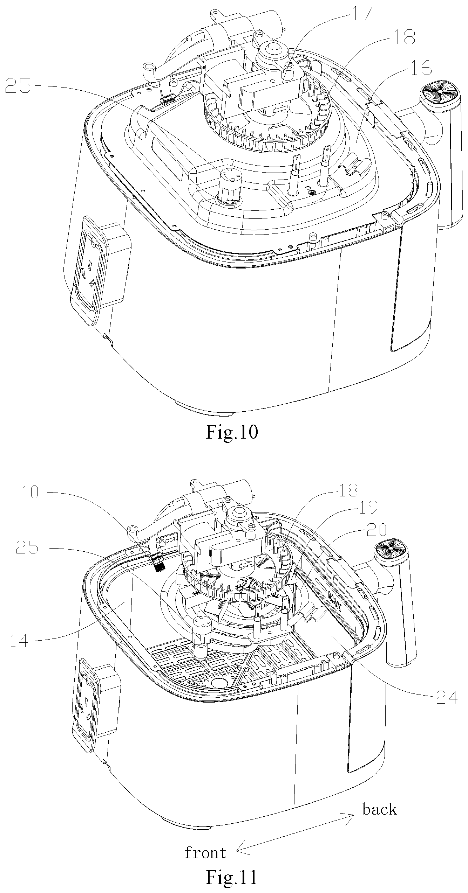

Referring to FIG. 1-11, the present invention discloses an air fryer fitted with an atmosphere light assembly. The air fryer fitted with an atmosphere light assembly comprises an upper housing assembly, a lower housing assembly and an atmosphere light assembly, wherein the upper housing assembly comprises a ring-shaped upper housing 1 and a top cover 6 covered on the upper housing 1, the upper housing 1 encloses a first chamber, the upper housing 1 is made of transparent material; wherein the atmosphere light assembly comprises a ring-shaped lightshade 2 located within the first chamber, an LED light strip 3 wound around provided at a bottom of an outer perimeter of the lightshade 2, a circuit board 4 electrically connected to the LED light strip 3, and a power supply module 27 that respectively supplies power to the LED light strip 3 and the circuit board 4; and a plurality of light guiding columns 201 are provided on an upper ring of an outer side wall of the lightshade 2, the light guiding column 201 is provided along the height of the lightshade 2.

Therefore, by providing an atmosphere light assembly in the air fryer, an LED light strip 3 provided on the atmosphere light assembly may change the flashing frequency and color according to different cooking states, which is more intuitive and improves the user's cooking experience. Then, by providing a light guiding column 201 on the lightshade 2, when the light from the LED light strip 3 shines on the lightshade 2, the light effect may be formed on the lightshade 2 with a sense of beauty, so as to enhance the sense of atmosphere of the air fryer and make it more superior. Finally, the LED light strip 3 may also be used as a night light or supplemental illumination, so as to improve the brightness in other areas of the kitchen and facilitate user operation.

Further, the air fryer further comprises a ring-shaped connecting housing 5 provided between the upper housing assembly and the lower housing assembly, a bottom of the upper housing 1 is provided on the connecting housing 5; an internal of the connecting housing 5 is annularly provided with a mounting slot 501, and the LED light strip 3 is mounted in the mounting slot 501. Preferably, the LED light strip 3 is glued in the mounting slot 501.

Consequently, the LED light strip 3 is provided in the mounting slot 501, so as to realize the "concealment" of the LED light strip 3, making the overall structure more beautiful and simple, and improving the beauty.

Referring again to FIG. 1-3, the lower housing assembly comprises a lower housing 13 provided at a bottom of the connecting housing 5 and encloses a second chamber, an inner housing 14 provided within the second chamber, and a mounting bracket 15 provided between the first chamber and the second chamber, wherein the mounting bracket 15 and the inner housing 14 enclose a cooking chamber, and a heating assembly is provided at a top of the cooking chamber.

Specifically, the cooking chamber is provided with a heat insulating plate 16 to separate an upper and a lower part of the cooking chamber into a heat dissipation chamber and a heating chamber; wherein the heating assembly comprises a motor 17 mounted on the mounting bracket 15, a first air blade 18 sleeved on an output shaft of the motor 17 and located in the heat dissipation chamber, a second air blade 19 mounted on the output shaft of the motor 17 and located in the heating chamber, and a heating pipe 20 mounted on the heat insulating plate 16 and located below the second air blade 19.

Thus, when the motor 17 starts and drives the output shaft to rotate, the output shaft may simultaneously drive the first air blade 18 and the second air blade 19 to rotate, the first air blade 18 rotates to realize the heat dissipation inside the housing and the motor 17, and the second air blade 19 rotates to drive the air heated by the heating pipe 20 to circulate in the heating chamber to realize the frying of food.

Preferably, the first air blade 18 is a turbine air blade, and the mounting bracket 15 and the heat insulating plate 16 enclose a turbine air duct. In addition, the air fryer further comprises an exhaust base penetrating the upper housing, the connecting housing and the lightshade, wherein the exhaust base is connected to the heat dissipation chamber, and an exhaust window connected to an external area is provided on the exhaust base.

Thus, after the first air blade 18 rotates, the air flows in the turbine duct and eventually exits through the exhaust window 701. Compared with the traditional air duct structure, by providing turbine air blades and turbine air ducts, the air guiding efficiency may be higher, the temperature rise of the exterior of the product and the motor may be reduced, and the heat dissipation effect may be improved.

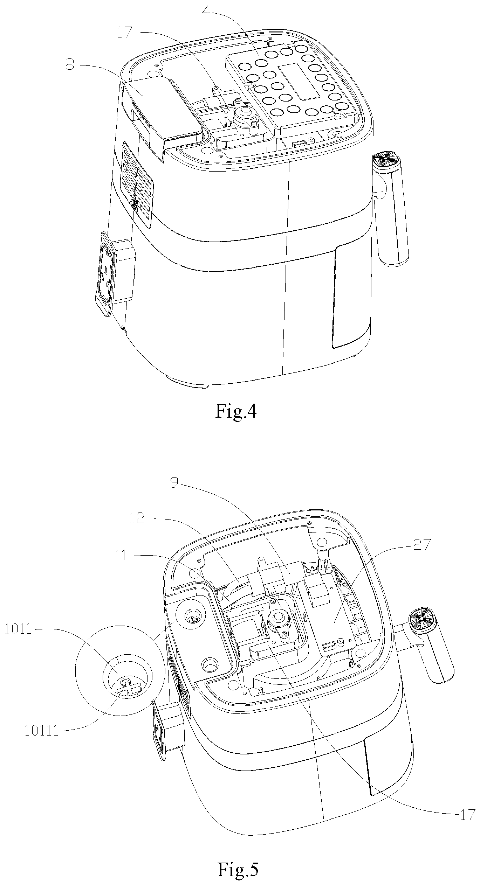

Referring to FIGS. 4-7, the air fryer further comprises a humidifying assembly, the humidifying assembly comprises a water tank 8 mounted on the upper housing 1, a water pump 9 mounted on a mounting bracket 15, an inlet tube 11, an outlet tube 12, and a nozzle 10; wherein an end of the inlet tube 11 is connected to the water tank 8, another end of the inlet tube is connected to the water pump 9, an end of the outlet tube 12 is connected to the water pump 9, another end of the outlet tube passes sequentially through the mounting bracket 15 and the heat insulating plate 16 and extends into the heating chamber, and the nozzle 10 is provided at an end of the outlet tube 12 and is located in the heating chamber. Specifically, a mounting chamber for mounting the water tank 8 is provided on the upper housing 1, when mounting the water tank 8 into the mounting chamber, the top surface of the water tank 8 is at the same level of the top cover 6; a snapping slot 1011 is provided on the mounting chamber 101, a snapping column 802 that is snap-fitted to the snapping slot 1011 is provided at a bottom of the water tank 8; an water outlet hole 801 is provided on the water tank 8, a through channel connected to the water outlet hole 801 is provided in the snapping column 802; in addition, a drainage nozzle 1012 located at a bottom of the snapping slot 1011 and connected to the snapping slot 1011 is further provided on the upper housing 1, and an end of the inlet tube 11 is sleeved on the drainage nozzle 1012.

Further, a guiding assembly is provided between the water tank 8 and the mounting chamber 101, the guiding assembly comprises a positioning column 29, a sealing gasket 28, and an elastic part 30, wherein a snapping ring 8011 is provided in the water outlet hole 801, an upper end of the positioning column 29 passes sequentially through the snapping slot and the snapping ring 8011 and is connected to the sealing gasket 28; a lower end of the positioning column 29 is provided with a restricting step 2901, the elastic part 30 is sleeved on the positioning column 29, an end of the elastic part 30 is connected to a bottom of the snapping ring 8011, another end of the elastic part 30 is abutted on the restricting step 2901; the sealing gasket 28 on the positioning column 29 is able to be driven downward and seal the water outlet hole 801 under an elastic force of the elastic part 30; and a protruding column 10111 is also provided in the snapping slot 1011, when the snapping column 802 is inserted into the snapping slot 1011, the protruding column 10111 abuts the positioning column 29 and drives the positioning column 29 to overcome the elastic force of the elastic part 30 and to move upwards, which consequently drives the sealing gasket 28 to move upwards, so as to open the water outlet hole 801.

In addition, in order to prevent water from leaking, a sealing ring 31 is provided on an external wall of the snapping column 802, when the snapping column 802 is inserted into the snapping slot 1011, an external side of the sealing ring 31 abuts an internal wall of the snapping slot 1011 to form a watertight seal.

Thus, the water pump 9 may increase the taste and flavor of the food by extracting water or food seasoning dissolved in water from the water tank 8 and sprinkling the water on the food through the nozzle.

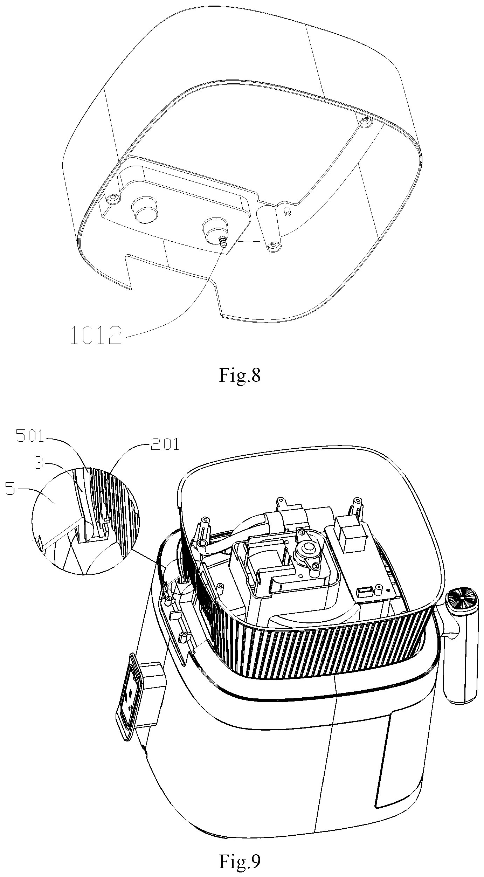

Referring to FIG. 9-11, the air fryer further comprises a fryer, a first opening connected to the heating chamber is provided on the rear side of the inner housing 14, and the fryer may be detachably provided in the heating chamber through the first opening. Specifically, the fryer comprises a fryer body 21 and a handle 22 provided on the fryer body 21, an internal of the fryer body is formed with an accommodating chamber for placing food, a second opening connected with the accommodating chamber is provided on a rear side of the fryer body 21, a glass panel 24 is provided at a front side of the second opening, and a viewing cover 23 made of transparent glass is provided at a rear side of the second opening. In addition, the air fryer further comprises an oven light 25 provided on the mounting bracket 15 for lighting, wherein the oven light 25 passes through the heat insulating plate 16 and extends into the heating chamber.

Thus, when the product is in use, the user may observe the cooking state of the food in the fryer in real time through the viewing cover 23 and the glass panel 24, and may turn over, season or dispense the food according to the state of the food, so as to ensure the quality of cooked food.

In addition, the lower housing 13 is also protruded with a wire winding column 26, so that the power supply wires may be wound and stored, and the wire winding column 26 is also provided with a socket for the plug of the power supply wires to be inserted.

In summary, the beneficial effects of the present invention by providing an air fryer with an atmosphere light assembly are as follows.
(1) The present invention provides an air fryer with an atmosphere light assembly. By providing the atmosphere light assembly, an LED light strip 3 provided on the atmosphere light assembly may change the flashing frequency and color according to different cooking states, which is more intuitive and improves the user's cooking experience. Then, by providing a light guiding column 201 on the lightshade 2, when the light from the LED light strip 3 shines on the lightshade, the light effect may be formed on the lightshade 2 with a sense of beauty, so as to enhance the sense of atmosphere of the air fryer and make it more superior. Finally, the LED light strip 3 may also be used as a night light or supplemental illumination, so as to improve the brightness in other areas of the kitchen and improve the user experience.
(2) The present invention provides an air fryer with an atmosphere light assembly by providing turbine air blades and turbine air ducts, compared with the traditional air duct structure, the air guiding efficiency may be higher, the temperature rise of the exterior of the product and the motor 17 may be reduced, and the heat dissipation effect may be improved.
(3) The present invention provides an air fryer with an atmosphere light assembly by providing the humidifying assembly, wherein the water pump 9 may increase the taste and flavor of the food by extracting water or food seasoning dissolved in water from the water tank 8 and sprinkling the water on the food through the nozzle.
(4) The present invention provides an air fryer with an atmosphere light assembly, wherein, when the product is in use, the user may observe the cooking state of the food in the fryer in real time through the transparent viewing cover 23, and may turn over, season or dispense the food according to the state of the food, so as to ensure the quality of cooked food.

The technical means disclosed in the present invention are not limited to the technical means disclosed in the above-mentioned implementation, but also include the technical solutions composed of any combination of the above technical features as long as the resulting embodiments are encompassed by the appended claims. It should be noted that for a person of ordinary skill in the art, a number of improvements and embellishments may be made as long as the resulting embodiments are encompassed by the scope of the appended claims.

## Claims

1. An air fryer with an atmosphere light assembly, **characterized in that**, comprising at least:
an upper housing assembly, wherein the upper housing assembly comprises a ring-shaped upper housing (1), the upper housing (1) encloses a first chamber, and the upper housing (1) is made of transparent material; and
an atmosphere light assembly, **characterized in that**
the atmosphere light assembly comprises
a ring-shaped lightshade (2) located within the first chamber,
an LED light strip (3) wound around a bottom of an outer perimeter of the lightshade (2), and
a circuit board (4) electrically connected to the LED light strip (3); and
a plurality of light guiding columns (201) are provided on an upper ring of an outer side wall of the lightshade (2).

2. The air fryer according to claim 1, **characterized in that**, wherein the upper housing assembly further comprises a ring-shaped connecting housing (5) provided at a bottom of the upper housing (1); a mounting slot (501) is provided on an internal of the connecting housing (5), and the LED light strip (3) is mounted in the mounting slot (501).

3. The air fryer according to claim 2, **characterized in that**, further comprises a lower housing assembly, wherein the lower housing assembly comprises
a lower housing (13) provided at a bottom of the connecting housing (5) and encloses a second chamber,
an inner housing (14) provided within the second chamber, and
a mounting bracket (15) provided between the first chamber and the second chamber; and
the mounting bracket (15) and the inner housing (14) enclose a cooking chamber, and a heating assembly is provided at a top of the cooking chamber.

4. The air fryer according to claim 3, **characterized in that**, wherein the cooking chamber is provided with a heat insulating plate (16) to separate an upper and a lower part of the cooking chamber into a heat dissipation chamber and a heating chamber; and the heating assembly comprises
a motor (17) mounted on the mounting bracket (15),
a first air blade (18) sleeved on an output shaft of the motor (17) and located in the heat dissipation chamber,
a second air blade (19) mounted on the output shaft of the motor (17) and located in the heating chamber, and
a heating pipe (20) mounted on the heat insulating plate (16) and located below the second air blade (19).

5. The air fryer according to claim 4, **characterized in that**, further comprises an exhaust base (7) penetrating the upper housing (1) and/or the connecting housing (5) and the lightshade (2), wherein the exhaust base (7) is connected to the heat dissipation chamber, and an exhaust window (701) connected to an external area is provided on the exhaust base (7).

6. The air fryer according to claim 4 or 5, **characterized in that**, wherein the first air blade (18) is a turbine air blade, and the mounting bracket (15) and the heat insulating plate (16) enclose a turbine air duct.

7. The air fryer according to claim 4, **characterized in that**, further comprises a humidifying assembly, wherein the humidifying assembly comprises
a water tank (8) mounted on the upper housing (1),
a water pump (9) and
a nozzle (10) mounted on the mounting bracket (15); and
the water tank (8) is connected to the water pump (9) through an inlet tube (11), and the nozzle (10) is connected to the water pump (9) through an outlet tube (12) and is provided in the heating chamber.

8. The air fryer according to claim 7, **characterized in that**, wherein the upper housing (1) is provided with a mounting chamber (101) for mounting the water tank (8), a snapping slot is provided on the mounting chamber (101), a snapping column (802) that is snap-fitted to the snapping slot is provided at a bottom of the water tank (8); and the water tank (8) is provided with a water outlet hole (801), a through channel connected to the water outlet hole (801) is provided in the snapping column (802); a drainage nozzle (1012) located at a bottom of the snapping slot and connected to the snapping slot is further provided on the upper housing (1), and an end of the inlet tube (11) is sleeved on the drainage nozzle (1012).

9. The air fryer according to claim 8, **characterized in that**, further comprises a guiding assembly provided between the water tank (8) and the mounting chamber (101), the guiding assembly comprises a positioning column (29), a sealing gasket (28), and an elastic part (30);
wherein a snapping ring (8011) is provided in the water outlet hole (801), an upper end of the positioning column (29) passes sequentially through the snapping slot (1011) and the snapping ring (8011) and is connected to the sealing gasket (28); a lower end of the positioning column (29) is provided with a restricting step (2901), the elastic part (30) is sleeved on the positioning column (29), an end of the elastic part (30) is connected to a bottom of the snapping ring (8011), and another end is abutted on the restricting step (2901);
wherein the sealing gasket (28) on the positioning column (29) is able to be driven downward and seals the water outlet hole (801) under an elastic force of the elastic part (30);
wherein the snapping slot (1011) is also provided with a protruding column (10111), when the snapping column (802) is inserted into the snapping slot (1011), the protruding column (10111) abuts the positioning column (29) and drives the positioning column (29) to overcome the elastic force of the elastic part (30) and to move upwards, which consequently drives the sealing gasket (28) to move upwards, so as to open the water outlet hole (801).

10. The air fryer according to claim 8, **characterized in that**, further comprises a sealing ring (31) sleeved on an external wall of the snapping column (802), wherein an external side of the sealing ring (31) abuts against an internal wall of the snapping slot (1011) to form a watertight seal, when the snapping column (802) is inserted into the snapping slot (1011).

11. The air fryer according to claim 4, **characterized in that**, further comprises a fryer, a first opening connected to the heating chamber is provided on a rear side of the inner housing (14), and the fryer is detachably provided in the heating chamber through the first opening;
wherein the fryer comprises
a fryer body (21) and
a handle (22) provided on the fryer body (21); and
an accommodating chamber for placing food is formed inside the fryer body (21), a second opening connected to the accommodating chamber is provided on a rear side of the fryer body (21), a viewing cover (23) is provided at the second opening to seal the second opening, and the viewing cover (23) is made of transparent material.

12. The air fryer according to claim 11, **characterized in that**, further comprises an oven light (25) provided on the mounting bracket (15) for lighting, and the oven light (25) passes through the heat insulating plate (16) and extends into the heating chamber.

## Patentansprüche

1. Luftfritteuse mit Atmosphärenlichtanordnung, **dadurch gekennzeichnet, dass** sie zumindest umfasst:
eine obere Gehäuseanordnung, worin die obere Gehäuseanordnung ein ringförmiges oberes Gehäuse (1) umfasst, das obere Gehäuse (1) eine erste Kammer umschließt, und das obere Gehäuse (1) aus transparentem Material hergestellt ist; und
eine Atmosphärenlichtanordnung, **dadurch gekennzeichnet, dass** die Atmosphärenlichtanordnung umfasst
einen ringförmigen Lichtschirm (2), der innerhalb der ersten Kammer gelegen ist, einen LED-Lichtstreifen (3), der um einen Boden eines Außenumfangs des Lichtschirms (2) gewickelt ist, und
eine Leiterplatte (4), die mit dem LED-Lichtstreifen (3) elektrisch verbunden ist; und
eine Vielzahl von Lichtführungssäulen (201) an einem oberen Ring einer äußeren Seitenwand des Lichtschirms (2) vorgesehen sind.

2. Luftfritteuse nach Anspruch 1, **dadurch gekennzeichnet, dass** worin die obere Gehäuseanordnung ferner ein ringförmiges Verbindungsgehäuse (5) umfasst, das an einem Boden des oberen Gehäuses (1) vorgesehen ist; ein Montageschlitz (501) an einem Inneren des Verbindungsgehäuses (5) vorgesehen ist, und der LED-Lichtstreifen (3) im Montageschlitz (501) montiert ist.

3. Luftfritteuse nach Anspruch 2, **dadurch gekennzeichnet, dass** sie ferner eine untere Gehäuseanordnung umfasst, worin die untere Gehäuseanordnung umfasst
ein unteres Gehäuse (13), das an einem Boden des Verbindungsgehäuses (5) vorgesehen ist und eine zweite Kammer umschließt,
ein inneres Gehäuse (14), das innerhalb der zweiten Kammer vorgesehen ist, und
einen Montagebügel (15), der zwischen der ersten Kammer und der zweiten Kammer vorgesehen ist; und
der Montagebügel (15) und das innere Gehäuse (14) eine Kochkammer umschließen, und eine Heizanordnung an einem Oberteil der Kochkammer vorgesehen ist.

4. Luftfritteuse nach Anspruch 3, **dadurch gekennzeichnet, dass** worin die Kochkammer mit einer Wärmeisolierplatte (16) versehen ist, um einen oberen und einen unteren Teil der Kochkammer in eine Wärmeabfuhrkammer und eine Heizkammer zu trennen; und die Heizanordnung umfasst
einen Motor (17), der am Montagebügel (15) montiert ist,
eine erste Luftschaufel (18), die auf eine Ausgangswelle des Motors (17) geschoben ist und in der Wärmeabfuhrkammer gelegen ist,
eine zweite Luftschaufel (19), die an der Ausgangswelle des Motors (17) montiert ist und in der Heizkammer gelegen ist, und
ein Heizrohr (20), das an der Wärmeisolierplatte (16) montiert ist und unter der zweiten Luftschaufel (19) gelegen ist.

5. Luftfritteuse nach Anspruch 4, **dadurch gekennzeichnet, dass** sie ferner eine Ablassbasis (7) umfasst, die das obere Gehäuse (1) und/oder das Verbindungsgehäuse (5) und den Lichtschirm (2) durchdringt, worin die Ablassbasis (7) mit der Wärmeabfuhrkammer verbunden ist, und ein Ablassfenster (701), das mit einem äußeren Bereich verbunden ist, an der Ablassbasis (7) vorgesehen ist.

6. Luftfritteuse nach Anspruch 4 oder 5, **dadurch gekennzeichnet, dass** worin die erste Luftschaufel (18) eine Turbinenluftschaufel ist, und der Montagebügel (15) und die Wärmeisolierplatte (16) eine Turbinenluftleitung umschließen.

7. Luftfritteuse nach Anspruch 4, **dadurch gekennzeichnet, dass** sie ferner eine Befeuchtungsanordnung umfasst, worin die Befeuchtungsanordnung umfasst
einen Wassertank (8), der am oberen Gehäuse (1) montiert ist,
eine Wasserpumpe (9) und
eine Düse (10), die am Montagebügel (15) montiert ist; und
der Wassertank (8) mit der Wasserpumpe (9) über ein Einlassrohr (11) verbunden ist, und die Düse (10) mit der Wasserpumpe (9) über ein Auslassrohr (12) verbunden ist und in der Heizkammer vorgesehen ist.

8. Luftfritteuse nach Anspruch 7, **dadurch gekennzeichnet, dass** worin das obere Gehäuse (1) mit einer Montagekammer (101) zum Montieren des Wassertanks (8) versehen ist, ein Schnappschlitz an der Montagekammer (101) vorgesehen ist, eine Schnappsäule (802), die in den Schnappschlitz eingeschnappt ist, an einem Boden des Wassertanks (8) vorgesehen ist; und
der Wassertank (8) mit einem Wasserauslassloch (801) versehen ist, ein Durchgangskanal, der mit dem Wasserauslassloch (801) verbunden ist, in der Schnappsäule (802) vorgesehen ist; eine Abflussdüse (1012), die an einem Boden des Schnappschlitzes gelegen ist und mit dem Schnappschlitz verbunden ist, ferner am oberen Gehäuse (1) vorgesehen ist, und ein Ende des Einlassrohres (11) auf die Abflussdüse (1012) geschoben ist.

9. Luftfritteuse nach Anspruch 8, **dadurch gekennzeichnet, dass** sie ferner eine Führungsanordnung umfasst, die zwischen dem Wassertank (8) und der Montagekammer (101) vorgesehen ist, die Führungsanordnung eine Positioniersäule (29), eine Dichtung (28) und ein elastisches Teil (30) umfasst;
worin ein Schnappring (8011) im Wasserauslassloch (801) vorgesehen ist, ein oberes Ende der Positioniersäule (29) der Reihe nach durch den Schnappschlitz (1011) und den Schnappring (8011) läuft und mit der Dichtung (28) verbunden ist; ein unteres Ende der Positioniersäule (29) mit einer einschränkenden Stufe (2901) versehen ist, das elastische Teil (30) auf die Positioniersäule (29) geschoben ist, ein Ende des elastischen Teils (30) mit einem Boden des Schnappringes (8011) verbunden ist, und ein anderes Ende an der einschränkenden Stufe (2901) anliegt;
worin die Dichtung (28) an der Positioniersäule (29) nach unten getrieben werden kann und das Wasserauslassloch (801) unter einer elastischen Kraft des elastischen Teils (30) abdichtet;
worin der Schnappschlitz (1011) auch mit einer hervorstehenden Säule (10111) versehen ist, wenn die Schnappsäule (802) in den Schnappschlitz (1011) eingefügt ist, die hervorstehende Säule (10111) an der Positioniersäule (29) anliegt und die Positioniersäule (29) antreibt, um die elastische Kraft des elastischen Teils (30) zu überwinden und sich nach oben zu bewegen, was demzufolge die Dichtung (28) dazu antreibt, sich nach oben zu bewegen, um das Wasserauslassloch (801) zu öffnen.

10. Luftfritteuse nach Anspruch 8, **dadurch gekennzeichnet, dass** sie ferner einen Dichtungsring (31) umfasst, der auf eine Außenwand der Schnappsäule (802) geschoben ist, worin eine Außenseite des Dichtungsringes (31) an einer Innenwand des Schnappschlitzes (1011) anliegt, um eine wasserdichte Versiegelung zu bilden, wenn die Schnappsäule (802) in den Schnappschlitz (1011) eingefügt ist.

11. Luftfritteuse nach Anspruch 4, **dadurch gekennzeichnet, dass** sie ferner eine Fritteuse umfasst, eine erste Öffnung, die mit der Heizkammer verbunden ist, an einer Rückseite des inneren Gehäuses (14) vorgesehen ist, und die Fritteuse in der Heizkammer durch die erste Öffnung abnehmbar vorgesehen ist;
worin die Fritteuse umfasst
einen Fritteusenkörper (21) und
einen Handgriff (22), der am Fritteusenkörper (21) vorgesehen ist; und
eine Aufnahmekammer zum Platzieren von Lebensmitteln innerhalb des Fritteusenkörpers (21) ausgebildet ist, eine zweite Öffnung, die mit der Aufnahmekammer verbunden ist, an einer Rückseite des Fritteusenkörpers (21) vorgesehen ist, eine Sichtabdeckung (23) an der zweiten Öffnung vorgesehen ist, um die zweite Öffnung abzudichten, und die Sichtabdeckung (23) aus transparentem Material hergestellt ist.

12. Luftfritteuse nach Anspruch 11, **dadurch gekennzeichnet, dass** sie ferner eine Ofenleuchte (25) umfasst, die am Montagebügel (15) zur Beleuchtung vorgesehen ist, und die Ofenleuchte (25) durch die Wärmeisolierplatte (16) läuft und sich in die Heizkammer hinein erstreckt.

## Revendications

1. Friteuse à air avec un ensemble de lumière d'atmosphère, **caractérisée en ce qu'**elle comprend au moins :
un ensemble de boîtier supérieur, dans lequel l'ensemble de boîtier supérieur comprend un boîtier supérieur en forme d'anneau (1), le boîtier supérieur (1) renferme une première chambre, et le boîtier supérieur (1) est fait d'un matériau transparent ; et
un ensemble de lumière d'atmosphère, **caractérisé en ce que** l'ensemble de lumière d'atmosphère comprend
un abat-jour en forme d'anneau (2) situé à l'intérieur de la première chambre,
une bande de lumière LED (3) enroulée autour d'un fond d'un périmètre extérieur de l'abat-jour (2), et
une carte de circuit imprimé (4) connectée électriquement à la bande de lumière LED (3) ; et
une pluralité de colonnes de guidage de lumière (201) sont prévues sur un anneau supérieur d'une paroi latérale extérieure de l'abat-jour (2).

2. Friteuse à air selon la revendication 1, **caractérisée en ce que** l'ensemble de boîtier supérieur comprend en outre un boîtier de connexion en forme d'anneau (5) prévu au niveau d'un fond du boîtier supérieur (1) ; une fente de montage (501) est prévue sur un intérieur du boîtier de connexion (5), et la bande de lumière LED (3) est montée dans la fente de montage (501).

3. Friteuse à air selon la revendication 2, **caractérisée en ce qu'**elle comprend en outre un ensemble de boîtier inférieur, dans lequel l'ensemble de boîtier inférieur comprend
un boîtier inférieur (13) prévu au niveau d'un fond du boîtier de connexion (5) et enferme une seconde chambre,
un boîtier interne (14) prévu à l'intérieur de la seconde chambre, et
un support de montage (15) prévu entre la première chambre et la seconde chambre ; et
le support de montage (15) et le boîtier interne (14) renferment une chambre de cuisson, et un ensemble de chauffage est prévu au sommet de la chambre de cuisson.

4. Friteuse à air selon la revendication 3, **caractérisée en ce que** la chambre de cuisson est pourvue d'une plaque d'isolation thermique (16) pour séparer une partie supérieure et inférieure de la chambre de cuisson en une chambre de dissipation thermique et une chambre de chauffage ; et l'ensemble de chauffage comprend un moteur (17) monté sur le support de montage (15),
une première lame d'air (18) emmanchée sur un arbre de sortie du moteur (17) et située dans la chambre de dissipation de chaleur,
une seconde lame d'air (19) montée sur l'arbre de sortie du moteur (17) et située dans la chambre de chauffage, et
un tuyau de chauffage (20) monté sur la plaque d'isolation thermique (16) et situé sous la seconde lame d'air (19).

5. Friteuse à air selon la revendication 4, **caractérisée en ce qu'**elle comprend en outre une base d'échappement (7) pénétrant dans le boîtier supérieur (1) et/ou le boîtier de connexion (5) et l'abat-jour (2), dans laquelle la base d'échappement (7) est reliée à la chambre de dissipation de chaleur, et une fenêtre d'échappement (701) reliée à une zone externe est prévue sur la base d'échappement (7).

6. Friteuse à air selon la revendication 4 ou 5, **caractérisée en ce que**, dans laquelle la première lame d'air (18) est une lame d'air de turbine, et le support de montage (15) et la plaque d'isolation thermique (16) enferment un conduit d'air de turbine.

7. Friteuse à air selon la revendication 4, **caractérisée en ce qu'**elle comprend en outre un ensemble d'humidification, dans laquelle l'ensemble d'humidification comprend
un réservoir d'eau (8) monté sur le boîtier supérieur (1),
une pompe à eau (9) et
une buse (10) montée sur le support de montage (15) ; et
le réservoir d'eau (8) est relié à la pompe à eau (9) par l'intermédiaire d'un tube d'entrée (11), et la buse (10) est reliée à la pompe à eau (9) par l'intermédiaire d'un tube de sortie (12) et est prévue dans la chambre de chauffage.

8. Friteuse à air selon la revendication 7 **caractérisée en ce que** le boîtier supérieur (1) est pourvu d'une chambre de montage (101) pour monter le réservoir d'eau (8), une fente d'encliquetage est prévue sur la chambre de montage (101), une colonne d'encliquetage (802) qui est ajustée par encliquetage à la fente d'encliquetage est prévue au fond du réservoir d'eau (8) ; et
le réservoir d'eau (8) est pourvu d'un trou de sortie d'eau (801), un canal traversant relié au trou de sortie d'eau (801) est prévu dans la colonne d'encliquetage (802) ; une buse de drainage (1012) située au fond de la fente d'encliquetage et reliée à la fente d'encliquetage est en outre prévue sur le boîtier supérieur (1), et une extrémité du tube d'entrée (11) est emmanchée sur la buse de drainage (1012).

9. Friteuse à air selon la revendication 8, **caractérisée en ce qu'**elle comprend en outre un ensemble de guidage prévu entre le réservoir d'eau (8) et la chambre de montage (101), l'ensemble de guidage comprend une colonne de positionnement (29), un joint d'étanchéité (28) et une partie élastique (30) ;
dans lequel un anneau d'encliquetage (8011) est prévu dans le trou de sortie d'eau (801), une extrémité supérieure de la colonne de positionnement (29) passe séquentiellement à travers la fente d'encliquetage (1011) et l'anneau d'encliquetage (8011) et est reliée au joint d'étanchéité (28) ; une extrémité inférieure de la colonne de positionnement (29) est pourvue d'un pas de restriction (2901), la partie élastique (30) est emmanchée sur la colonne de positionnement (29), une extrémité de la partie élastique (30) est reliée à un fond de l'anneau d'encliquetage (8011), et une autre extrémité est en butée sur le pas de restriction (2901) ;
dans lequel le joint d'étanchéité (28) sur la colonne de positionnement (29) peut être entraîné vers le bas et scelle le trou de sortie d'eau (801) sous une force élastique de la partie élastique (30) ;
dans lequel la fente d'encliquetage (1011) est également pourvue d'une colonne saillante (10111), lorsque la colonne d'encliquetage (802) est insérée dans la fente d'encliquetage (1011), la colonne saillante (10111) vient en butée contre la colonne de positionnement (29) et entraîne la colonne de positionnement (29) pour surmonter la force élastique de la partie élastique (30) et pour se déplacer vers le haut, ce qui entraîne par conséquent le joint d'étanchéité (28) à se déplacer vers le haut, de manière à ouvrir le trou de sortie d'eau (801).

10. Friteuse à air selon la revendication 8, **caractérisée en ce qu'**elle comprend en outre une bague d'étanchéité (31) emmanchée sur une paroi extérieure de la colonne d'encliquetage (802), dans laquelle un côté extérieur de la bague d'étanchéité (31) vient en butée contre une paroi intérieure de la fente d'encliquetage (1011) pour former un joint étanche à l'eau, lorsque la colonne d'encliquetage (802) est insérée dans la fente d'encliquetage (1011).

11. Friteuse à air selon la revendication 4, **caractérisée en ce qu'**elle comprend en outre une friteuse, une première ouverture reliée à la chambre de chauffage est prévue sur un côté arrière du boîtier intérieur (14), et la friteuse est prévue de manière amovible dans la chambre de chauffage à travers la première ouverture ; dans laquelle la friteuse comprend
un corps de friteuse (21) et
une poignée (22) prévue sur le corps de friteuse (21) ; et
une chambre de réception pour placer des aliments est formée à l'intérieur du corps de friteuse (21), une seconde ouverture reliée à la chambre de réception est prévue sur un côté arrière du corps de friteuse (21), un couvercle de visualisation (23) est prévu au niveau de la seconde ouverture pour sceller la seconde ouverture, et le couvercle de visualisation (23) est fait d'un matériau transparent.

12. Friteuse à air selon la revendication 11, **caractérisée en ce qu'**elle comprend en outre une lumière de four (25) prévue sur le support de montage (15) pour l'éclairage, et la lumière de four (25) passe à travers la plaque d'isolation thermique (16) et s'étend dans la chambre de chauffage.
